# EUROPEAN PATENT SPECIFICATION

(11) **EP 0 977 715 B1**
(45) Date of publication and mention of the grant of the patent: **21.11.2001**
(21) Application number: 98917391.9
(22) Date of filing: 17.04.1998
(51) Int. Cl.: C03C 25/10, C04B 41/50

(54) **INORGANIC FIBRE DUST SUPPRESSOR**
STAUBUNTERDRÜCKER FÜR ANORGANISCHE FASERN
DISPOSITIF D'ELIMINATION DE POUSSIERE DE FIBRES INORGANIQUES

(30) Priority: 25.04.1997 GB 9708480
(43) Date of publication of application: 09.02.2000
(73) Proprietor: THE MORGAN CRUCIBLE COMPANY PLC, Windsor, Berkshire SL4 1EP (GB)
(72) Inventor: MARTIN, Jean-Louis, F-42600 Montbrison (FR)
(74) Representative: Boff, James Charles
(86) International application number: GB9801122
(87) International publication number: WO9849113

(56) References cited:
- EP-A- 0 242 569
- WO-A-96/40498
- WO-A-98/21155
- DATABASE WPI Section Ch, Week 7819 Derwent Publications Ltd., London, GB; Class C03, AN 78-34477A XP002070409 & JP 53 035 026 A (SHINETSU CHEM IND CO LTD)

## Description

This invention relates to a method of reducing dust created when a body of inorganic fibre is handled and is particularly applicable to man made vitreous fibres.

It is well known that inorganic fibre creates dust when it is handled. The dust comes primarily from the fibre fracturing and producing small particles of dust but there are other sources of dust: for example "shot" (unfiberised material) is frequently present in fibre products. From whatever source, when inhaled, respirable dust can cause coughing and possibly more serious respiratory diseases. It is widely thought that the respirable dust created by asbestos fibre can cause lung cancer.

Accordingly there is a demand for fibre products to be as dust-free as possible.

It has been previously proposed to spray fibres with refractory materials to improve their refractory characteristics (see for example US-A-4282284, GB-A-2020710, GB-A-1041996). It is also known to face fibrous mats with layers of heat insulating or exothermic materials (see for example GB-A-1287402). It is known to treat asbestos diaphragms for electrolytic cells with a coating or size of water-soluble silicate on the anolyte side thereof. US-A-4507355 applies refractory binder to textile yarns and fabrics to provide flame resistance; this patent is concerned with "dusting" of the refractory coating and methods to overcome this but is not concerned with dust produced by the fibres themselves. None of these documents disclose a method for reducing the amount of dust produced on handling an inorganic fibre body.

Many documents are concerned with apparatus for spraying and heating (see for example GB-A-1600543, GB-A-1398336, GB-A-1238274, GB-A-994389, EP-A-0533094, US-A-4917717, US-A-4002143, US-A-3924565, US-A-3904346, AND US-A-3895126).

All of the above documents have been mentioned as the result of searches made on the priority British application and are quoted to assist understanding of the present invention.

The present invention provides a method of reducing the amount of dust created in handling an inorganic fibre body, the method comprising spraying the surface of the body with a glaze to form an adherent flexible skin to the body. The glaze may be, for example, a solution comprising sodium tetraborate.

The skin should not have a great thickness, as its rigidity would then result in cracking of the skin on flexing of the body. On the other hand the glaze should be applied in sufficient quantity that the skin is effectively continuous over the surface of the body (excluding of course any cut ends).

Further features of the invention will be apparent from the claims with reference to the following description and the drawings in which:-
Fig. 1 is an overall view of part of a blanket forming line incorporating a sprayer in accordance with the invention.
Fig. 2 is a detailed view of a sprayer as shown in Fig. 1
Fig. 3 shows in sectional detail the action of spraying.

To understand the background to the invention it is necessary to consider the conventional process of forming inorganic fibre.

Conventionally, fibre is produced in bulk form by methods such as passing a high speed jet of air or other gas across a melt stream (blowing); or allowing a melt stream to impinge on a rotating wheel (spinning). In the production of blanket a temporary binder is typically added at this stage to lubricate the fibre and to facilitate later needling. The fibre is then laid onto a conveyor belt and passed through a needler that forms the fibres into a blanket. The needler uses needles to push or pull the fibres, entangling and interweaving them to form the blanket. The next stage is to pass the blanket through an annealing oven which heats the blanket to about 500-800°C and drives off the binder. The blanket is then cooled, checked, weighed and trimmed before packaging.

In the present invention a glaze is sprayed onto the body at a convenient point in the manufacturing process.

For blanket, a convenient time to apply the glaze to the fibres is after the needling stage but before the blanket has entered the annealing oven.

However some inorganic fibres are soluble in water (see for example WO93/15028, WO94/15883 and WO96/04214). If the fibre is soluble in water this can cause problems - the high temperatures in the annealing oven combined with the water can cause considerable damage. Accordingly for such fibres the glaze may be applied after the blanket leaves the annealing oven and is cooled to room temperature, the blanket then passing through an additional drying oven at a temperature of, for example, about 120-150°C.

Spraying can be done with any suitable equipment and for blanket, advantageously, both the top and the underside of the blanket would be sprayed as it passes through the sprayer.

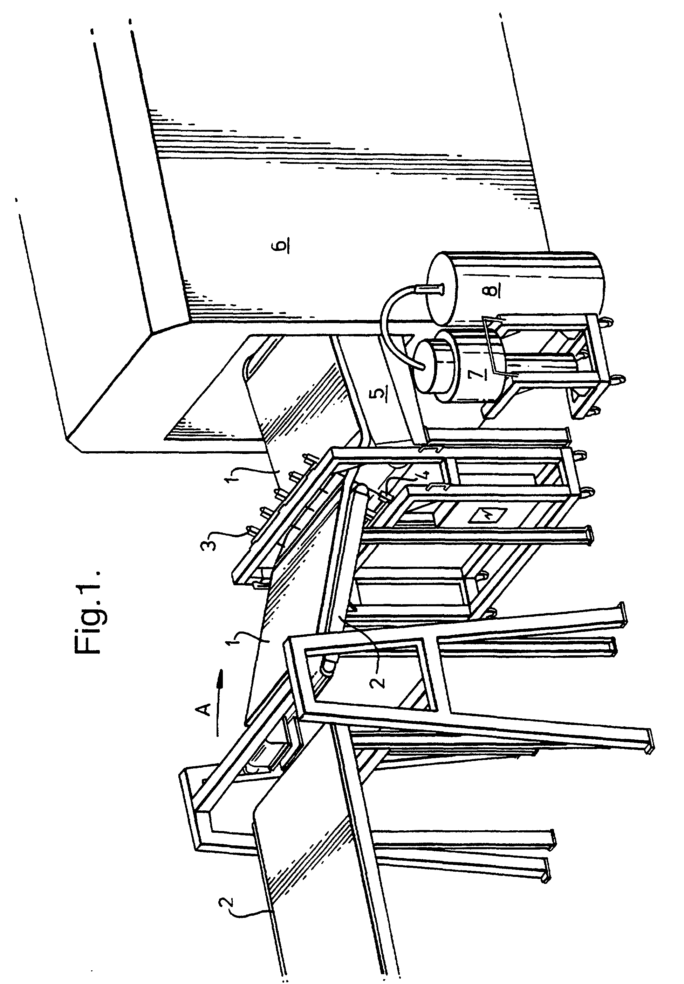

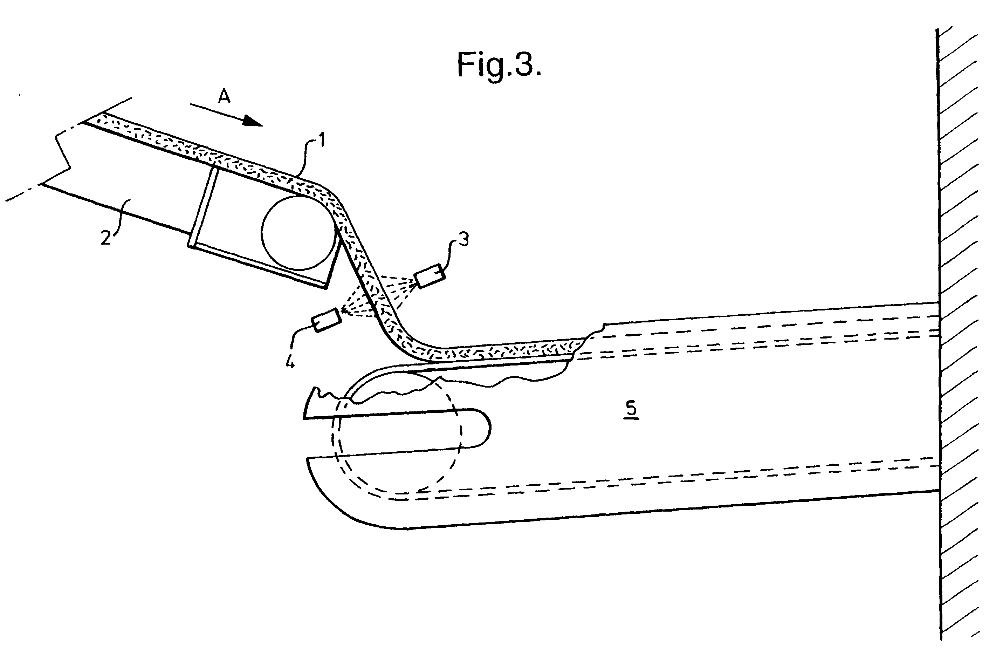

In Fig. 1 and Fig. 3 blanket 1 from a conveyor 2 passes in the direction A between sprayheads 3,4 situated downstream of the conveyor 2 and disposed to spray the upper and lower surfaces respectively of the blanket 1. The blanket 1 then passes on further conveyor 5 into an annealing oven 6. A pneumatic pump 7 operatively connects a reservoir 8 to the sprayheads 3,4. The reservoir 8 contains the glaze.

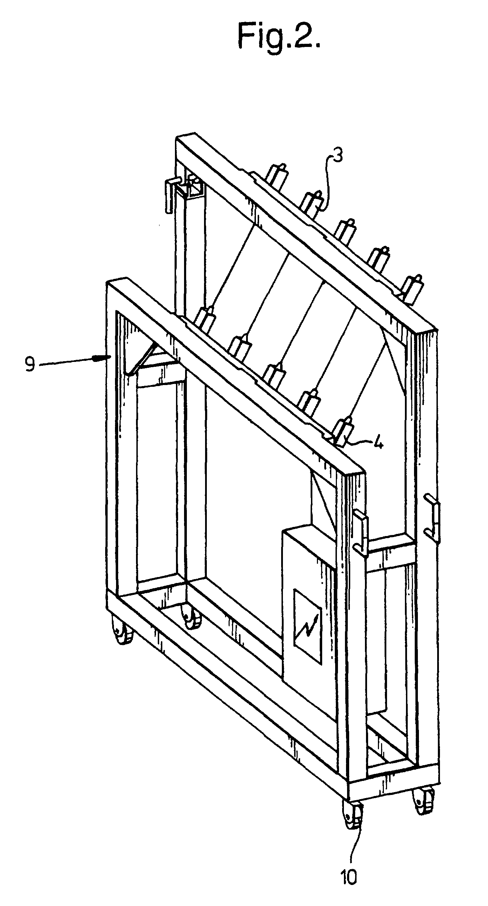

As can be seen in closer detail in Fig 2 the sprayheads 3,4 are mounted on wheels 10 so that they can be moved out of position if spraying is not required or if the sprayhead has to be moved to the downstream side of the annealing oven 6 (e.g. for body fluid soluble fibres) Where the sprayheads are situated downstream of the annealing oven a separate drying oven may be placed downstream of the sprayheads to dry the glaze to form the skin. It will be apparent that cutting the body after spraying will produce surfaces which do not suppress the dust in the same way as the sprayed surfaces.

The glaze should be a material that will form a reasonably coherent covering to the body, and which preferably should not evolve noxious materials when fired. A suitable glaze for use in accordance with the invention contains sodium tetraborate at a concentration of 10 - 20 g/l, preferably 15 g/l. This glaze may advantageously be applied at a rate of about 100 ml/m². A theoretical suitable range of thickness for the glazes is, by calculation, 0.6 microns to 10 microns (µm) thick. A calculated optimum thickness is approximately 1.5 microns (µm) thick. If the skin is too thin it will be difficult to ensure complete coverage, if it is too thick the skin will become liable to cracking and additionally the flexibility of the blanket will be impaired

For high temperature fibres the performance of the fibres is not affected up to temperatures of 1400°C.

It will be evident to the person skilled in the art that the invention is applicable not just to blanket but to other inorganic fibre products where dust production is a problem.

## Claims

1. A method of reducing the amount of dust created in handling an inorganic fibre body, comprising spraying the body with a glaze to form an adherent flexible skin to the body.

2. A method as claimed in claim 1 in which the body is a blanket.

3. A method as claimed in claim 1 or claim 2, wherein the method comprises manufacturing the fibre body, spraying the body with the glaze, and annealing the fibre body in an annealing oven.

4. A method as claimed in claim 1 or claim 2, wherein the method comprises manufacturing the fibre body, annealing the body in an annealing oven, cooling the body to room temperature, spraying the body with the glaze, and drying the fibre in a drying oven running at a lower temperature than the annealing oven.

5. A method as claimed in any preceding claim in which the glaze is a solution comprising sodium tetraborate.

6. A method as claimed in claim 5, wherein the spray contains sodium tetraborate at a concentration of 10-20 g/l.

7. A method as claimed in claim 4, wherein the spray contains sodium tetraborate at a concentration of 15 g/l.

8. A method as claimed in any preceding claim, wherein the spray is applied at a rate of about 100 ml/m².

9. Inorganic fibre blanket coating apparatus, comprising a conveyor adapted to carry the inorganic fibre blanket, through a glaze sprayer adapted to spray the blanket and situated upstream of an annealing oven.

10. Inorganic fibre blanket coating apparatus comprising a conveyor adapted to carry the inorganic fibre blanket through a glaze sprayer adapted to spray the blanket and situated downstream of an annealing oven, and additionally comprising a drying oven situated downstream of the glaze sprayer.

11. An inorganic fibre body comprising a sprayed glaze forming an adherent flexible dust suppressing skin to the body.

12. An inorganic fibre body as claimed in claim 11 in which the glaze comprises sodium tetraborate.

13. An inorganic fibre body as claimed in claim 11 or claim 12 in which the body is a blanket.

## Patentansprüche

1. Verfahren zum Verringern der Staubmenge, die in einem anorganischen Faserkörper geschaffen wird, das aufweist, den Körper mit einem Überzug zu besprühen, um eine anhaftende elastische Haut auf dem Körper zu bilden.

2. Verfahren nach Anspruch 1, in dem der Körper ein Decke ist.

3. Verfahren nach Anspruch 1 oder 2, in dem das Verfahren Herstellung des Faserkörpers aufweist, Besprühung des Körpers mit dem Überzug, und Temperung des Faserkörpers in einem Temperungsofen.

4. Verfahren nach Anspruch 1 oder 2, in dem das Verfahren Herstellung des Faserkörpers aufweist, Temperung des Faserkörpers in einem Temperungsofen, Abkühlung des Körpers auf Zimmertemperatur, Besprühung des Körpers mit dem Überzug, und Trocknung der Faser in einem Trocknungsofen, der bei einer geringeren Temperatur als der Temperungsofen arbeitet.

5. Verfahren nach einem vorhergehenden Anspruch, in dem der Überzug eine Lösung ist, die Natriumtetraborat aufweist.

6. Verfahren nach Anspruch 5, in dem der Sprühnebel Natriumtetraborat mit einer Konzentration von 10-20 g/l enthält.

7. Verfahren nach Anspruch 4, in dem der Sprühnebel Natriumtetraborat mit einer Konzentration von 15 g/l enthält.

8. Verfahren nach einem vorhergehenden Anspruch, in dem der Sprühnebel mit einer Rate von ungefähr 100 ml/m² aufgetragen wird.

9. Beschichtungsvorrichtung für eine anorganische Faserdecke, die ein Förderband aufweist, das die anorganische Faserdecke durch ein Überzugssprühgerät tragen kann, das die Decke besprühen kann und das stromauf von einem Temperungsofen gelagert ist.

10. Beschichtungsvorrichtung für eine anorganische Faserdecke, die ein Förderband aufweist, das die anorganische Faserdecke durch ein Überzugssprühgerät tragen kann, das die Decke besprühen kann und das stromab von einem Temperungsofen gelagert ist, und die zusätzlich einen Trockungsofen aufweist, der stromab von dem Überzugssprühgerät gelagert ist.

11. Anorganischer Faserkörper, der einen gesprühten Überzug aufweist, der eine anhaftende elastische staubunterdrückende Haut auf dem Körper bildet.

12. Anorganischer Faserkörper nach Anspruch 11, in dem der Überzug Natriumtetraborat aufweist.

13. Anorganischer Faserkörper nach Anspruch 11 oder 12, in dem der Körper eine Decke ist.

## Revendications

1. Procédé pour réduire la quantité de poussière créée pendant la manipulation d'un corps formé de fibres inorganiques, comprenant la pulvérisation, sur le corps, d'un glaçage pour former une peau souple adhérente sur le corps.

2. Procédé selon la revendication 1, dans lequel le corps est une couverture.

3. Procédé selon la revendication 1 ou la revendication 2, ledit procédé comprenant la fabrication du corps à base de fibres, la pulvérisation du glaçage sur le corps et le recuit du corps à base de fibres dans un four à recuit.

4. Procédé selon la revendication 1 ou la revendication 2, ledit procédé comprenant la fabrication du corps à base de fibres, le recuit du corps dans un four à recuit, le refroidissement du corps à la température ambiante, la pulvérisation du glaçage sur le corps et le séchage des fibres dans un four de séchage fonctionnant à une température inférieure à celle du four à recuit.

5. Procédé selon l'une quelconque des revendications précédentes, dans lequel le glaçage est une solution comprenant du tétraborate de sodium.

6. Procédé selon la revendication 5, dans lequel la solution à pulvériser contient du tétraborate de sodium à une concentration de 10-20 g/l.

7. Procédé selon la revendication 4, dans lequel la solution à pulvériser contient du tétraborate de sodium à une concentration de 15 g/l.

8. Procédé selon l'une quelconque des revendications précédentes, dans lequel on applique la solution à pulvériser à un taux d'environ 100 ml/m².

9. Appareil d'enduction de couvertures à base de fibres inorganiques, comprenant un dispositif de transport conçu pour transporter la couverture à base de fibres inorganiques à travers un pulvérisateur de glaçage conçu pour pulvériser la couverture et situé en amont d'un four à recuit.

10. Appareil d'enduction de couvertures à base de fibres inorganiques, comprenant un dispositif de transport conçu pour transporter la couverture à base de fibres inorganiques à travers un pulvérisateur de glaçage conçu pour pulvériser la couverture et situé en aval d'un four à recuit, et comprenant, en outre, un four de séchage situé en aval du pulvérisateur de glaçage.

11. Corps à base de fibres inorganiques, comprenant un glaçage pulvérisé formant une peau souple adhérente supprimant la poussière sur le corps.

12. Corps à base de fibres inorganiques selon la revendication 11, le glaçage comprenant du tétraborate de sodium.

13. Corps à base de fibres inorganiques selon la revendication 11 ou la revendication 12, ledit corps étant une couverture.
